Europäisches Patentamt

European Patent Office

Office européen des brevets

(11) Veröffentlichungsnummer: **0 646 437 A1**

# (12) EUROPÄISCHE PATENTANMELDUNG

(21) Anmeldenummer: **94114982.5**

(22) Anmeldetag: **23.09.94**

(51) Int. Cl.⁶: **B24C 11/00**, C09K 3/14

(30) Priorität: **29.09.93 DE 4333021**

(43) Veröffentlichungstag der Anmeldung:
**05.04.95 Patentblatt 95/14**

(84) Benannte Vertragsstaaten:
**DE ES FR GB IT**

(71) Anmelder: **B.U.S. Berzelius Umwelt-Service AG**
**Dag-Hammarskjöld-Weg 3**
**D-65726 Eschborn (DE)**

(72) Erfinder: **Merker, Gerhard**
**Am Kirschenberg 3**
**D-35519 Rockenberg (DE)**
Erfinder: **Ballhorn, Reinhard, Dr.**
**Büschelstr. 11**
**D-64297 Darmstadt (DE)**

(74) Vertreter: **Gudel, Diether, Dr.**
**Patentanwälte**
**Dr. Weinhold, Dannenberg,**
**Dr. Gudel, Schubert**
**Grosse Eschenheimer Strasse 39**
**D-60313 Frankfurt (DE)**

(54) **Schleif-, Schneid- und Strahlmittel auf der Basis von Spinell.**

(57) Beschrieben wird ein Schleif-, Schneid- und Strahlmittel, das als Hauptphase Spinell enthält und als Nebenkomponenten Kalziumaluminatphasen und/oder Korund.

EP 0 646 437 A1

Spinell hat sich als Schleifmittel bis heute nicht durchsetzen können, und zwar weil es einerseits zu teuer ist und andererseits qualitativ schlechte Ergebnisse liefert. Üblicherweise verwendet man heute Korund als Schleif-, Schneid- und Poliermittel.

Demgegenüber liegt der vorliegenden Erfindung die Aufgabe zugrunde, ein Schleifmittel bzw. ein Schneidmittel auf der Basis von Spinell vorzuschlagen, welches sich, verglichen mit herkömmlichen Mitteln, durch fühlbar verbesserte Eigenschaften auszeichnet. Auch soll das neuartige Mittel als Strahlmittel eingesetzt werden können.

Die Lösung dieser Aufgabe erfolgt durch die Merkmale des Hauptanspruchs. Durch die somit erfindungsgemäß vorgesehenen Fremdeinschlüsse im Spinell (Primärkorn) werden Sollbruchstellen des Kristalls geschaffen, die zur Bildung neuer Schneidkanten führt. Nachstehend angegebene Vergleichsversuche verdeutlichen die qualitative Überlegenheit des erfindungsgemäßen Mittels im Vergleich mit dem Stand der Technik.

Auch durch die Maßnahmen nach Patentanspruch 2 wird die Ausbildung der Sollbruchstellen und damit die Bildung neuer Schneidkanten unterstützt.

Die Patentansprüche 3, 4 und 6 geben bevorzugte Anteile der Kalziumaluminatphasen bzw. des Korunds an.

Patentanspruch 5 charakterisiert eine bevorzugte Zusammensetzung der Hauptkalziumphase nach Patentanspruch 4.

Eine wichtige Ausgestaltung der Erfindung ist in Patentanspruch 7 angegeben. Dort wird definiert, daß die durch die Einlagerungen ausgebildeten Sollbruchstellen vorzugsweise orientiert im Kristall ausgerichtet sind derart, daß die Erfindungsaufgabe optimal gelöst wird, d. h. daß sich neue Schneidkanten ausbilden.

Die Erfindung betrifft somit ein neuartiges Schleif-, Schneid- und Strahlmittel, das sich durch eine hohe Zähigkeit und Spanfähigkeit auszeichnet. Diese besonderen Eigenschaften werden dadurch erreicht, daß künstliche Sollbruchstellen durch gezielten Einbau von schichtförmigen und/oder in einer kristallographischen Richtung bevorzugt gewachsenen Fremdkristallen auf Korngrenzen und Kristallflächen des eigentlichen Schleifkorns erzeugt werden. Das Primärkorn ist ein durch Schmelzen bzw. Sinterung von $Al_2O_3$- und MgO-reichen Materialien erzeugter Spinell.

Spinell kristallisiert bevorzugt unter Ausbildung idiomorpher Kristalle in Form von Oktaedern, d. h. Doppelpyramiden. Die Kristallgröße hängt maßgeblich von der Abkühlungsgeschwindigkeit ab und kann deshalb erheblichen Schwankungen unterliegen. Der Spinell besitzt ein starkes Selbstreinigungsvermögen. Fremdkristalle werden beim Wachstum nach außen gedrängt und auf den Oktaederflächen angelagert bzw. umwachsen. Der Zonarbau, Zeichen eines sukzessiven Kristallwachstums, ist bei Spinell deutlich ausgeprägt. Unterstrichen wird dies durch die orientierte Einlagerung von Fremdeinschlüssen.

Spinell ist ein in der Natur vorkommendes Material der allgemeinen chemischen Zusammensetzung $XY_2O_4$. Dabei steht X für 2-wertige Kationen, wie z. B. Mg, Zn, Ni, Fe, Mn, und Y für 3-wertige Kationen, wie z. B. Al, Cr, Fe.

Die Spinelle besitzen in der Regel einen $Al_2O_3$- und gelegentlich einen Sauerstoff-Überschuß, die beide durch Leerstellen im Metallgitter bedingt sind.

In der Natur vorkommende Spinelle führen z. T. erhebliche Gehalte an Fremdionen wie Vanadium (Vanadomagnetit), Titan (Titanomagnetit), Kupfer, Zinn und Alkalien.

Das Kristallgitter von Spinell ist hex'octaedrisch; von den Kationen sind pro Zelle entsprechend beiden Formeltypen $x^{(4)}y^{(6)}_2O_4$ und $x^{(4)}y^{(6)}x^{(8)}O_4$ acht tedraedrisch von vier Sauerstoffatomen und sechzehn oktaedrisch von sechs Sauerstoffatomen umgeben.

Unter der Bezeichnung "Edler Spinell", auch MA-Spinell genannt, wird reines $MgAl_2O_4$ bezeichnet; es ist farblos. Die Erfindung betrifft auch diesen Edler Spinell, der die größte Härte aller Spinellarten hat.

Der MA-Spinell hat auf der Moh'schen Härteskala die Härte 8 und ist damit nur geringfügig weicher als Korund. Letzterer ist heute das wichtigste Schleif-, Schneid- und Poliermittel.

Entscheidend für die Wirksamkeit und damit für die Qualität eines Schleif- und Schneidmittels ist neben seiner Härte erfindungsgemäß seine Fähigkeit, sich selbst zu schärfen, d. h. immer wieder neue Schneidkanten zu bilden. Dies sind bevorzugt Korngrenzen und Spaltflächen, bedingt durch die Korn- und Kristallform sowie den inneren Kristallaufbau. Wie die Erfindung zeigt, kann die Ausbildung frischer Schneidkanten dadurch erreicht werden, daß gezielt Sollbruchstellen in das Schleifkorn eingebracht werden. Die Sollbruchstellen werden durch Fremdeinschlüsse auf Korngrenzen und als orientierte Einlagerungen auf den Kristallflächen erzeugt. In der Praxis unerwünscht ist der Ausbruch von Schleifkörnern und ebenso das Sich-Abschleifen der Kornkanten. Die Bildung neuer Schneidkanten wird dadurch erreicht bzw. wird dadurch verstärkt, daß dem Spinell eine überstöchiometrische Menge von $Al_2O_3$ zugegeben wird. Es ist bekannt, daß der Spinell bis zu 98 Gew.% $Al_2O_3$ in fester Lösung in das Kristallgitter aufnehmen kann. Mit vorhandenem MgO reagiert dieser $Al_2O_3$-Überschuß zu Spinell unter Volumenvergrößerung. In Gegenwart von CaO kommt es zur Bildung von verschiedenen Kalziumaluminaten.

Diese Kalziumaluminate bilden mineralogische Nebenphasen, die ebenso wie Korund orientiert im Spinell eingelagert sein können bzw. auf den Korngrenzen liegen. Sie bilden somit ebenfalls künstliche Sollbruchstellen im dichten Spinellgefüge.

Insbesondere die CaO x 6 $Al_2O_3$-Phase bildet plattige bis stengelige Kristalle, die bevorzugt auf Korngrenzen und/oder den Spinellkristallen eingelagert sind. Die Ausscheidung bzw. Ausbildung von Korund erfolgt durch Zugabe von $Al_2O_3$ bzw. $Al_2O_3$-bildenden Komponenten über die Menge hinaus, die durch die Aufnahme von $Al_2O_3$ in das Spinellgitter gegeben ist.

Es ist offensichtlich, daß diese Produkte auch durch reine Ausgangsmaterialien wie CaO, MgO und $Al_2O_3$ hergestellt werden können.

Die Herstellung von derartigen Produkten erfolgt durch Einschmelzung bzw. Sinterung von entsprechenden Mischungen unter Energiezufuhr. Dies erfolgt vorzugsweise im elektrischen Lichtbogenofen, kann aber auch in anderen Schmelzaggregaten wie Plasmaofen, Drehrohr etc. erfolgen. Im Patent deutschen Patent P 23 33 021.5-41 wird ein Verfahren zur Schmelzspinellherstellung aus Reststoffen beschrieben. Analog diesem Verfahren kann auch das neue Schleif-, Schneid- und Strahlmittel erzeugt werden.

Das Schmelzprodukt wird nach Abkühlung vorgebrochen, zerkleinert und durch verschiedene Siebstufen in Produkte mit entsprechender Körnung aufgeteilt, wie es Stand der Technik für die derzeitigen Marktprodukte ist (s. Kornklassen nach FEPA).

Versuch 1

Entsprechend P 32 33 021.5-41 wurde ein MA-Spinell folgender chemischer Zusammensetzung eingesetzt:

| | |
|---|---|
| $Al_2O_3$ | 83,6 % |
| $Fe_2O_3$ | 0,8 % |
| CaO | 4,2 % |
| MgO | 9,8 % |
| $SiO_2$ | 1,4 % |
| $K_2O$ | <0,1 % |
| $Na_2O$ | <0,1 % |

Mit einer Körnung von 0,5 - 1,0 mm des neu entwickelten Schleifmittels wurden Trennscheiben (178 x 3 x 22,2 mm) angefertigt, dazu parallel als Vergleich die gleichen Trennscheiben mit dem Standardmaterial "F" (Schmelzkorund) hergestellt und Schneidversuche durchgeführt. Dabei ergab sich nachfolgendes Testergebnis:

| Produkt | Durchmesser (mm) | | Differenz (mm) | Trennzeit (sec) | Q-Faktor | Zerspanungs- leistung $\frac{cm^2}{sec.}$ | Q-Faktor x Zerspa- nungs- leistung |
|---|---|---|---|---|---|---|---|
| | davor | danach | | | | | |
| neues Produkt | 178 | 169,9 169,5 | 8,10 | 28 25 | 1,44 1,29 | 1,42 1,54 | 2,04 1,87 |
| Standard | 178 | n.b. * | 8,5 | n.b.* | 1,9 | 0,8 | 1,52 |

\* = nicht bestimmt

(Der Q-Faktor ist ein Maß für die Abnutzung.)

Versuch 2

Entsprechend P 32 33 021.5-41 wurde ein MA-Schmelzspinell nachfolgender chemischer Zusammensetzung eingesetzt:

| | |
|---|---|
| $Al_2O_3$ | 91,0 % |
| $Fe_2O_3$ | 0,2 % |
| CaO | 4,5 % |
| MgO | 5,1 % |
| $SiO_2$ | 0,6 % |
| $K_2O$ | <0,02% |
| $Na_2O$ | <0,1 % |

Im Versuch 2 wurde das neu entwickelte Korn gegenüber normalem Ma-Spinell als Schneidmittel getestet. Zum Einsatz kamen Standardtrennscheiben der Abmessung 178 x 2,2 mm. Die Drehzahl betrug 8600 UPM, die Trennfläche 62,8 $cm^2$.

Das Ergebnis zeigt die nachfolgende Tabelle:

| Produkt | Durchmesser (mm) | | Differenz (mm) | Trennzeit (sec) | Q-Faktor | Zerspanungs- leistung $\frac{cm^2}{sec.}$ | | Q-Faktor x Zerspa- nungs- leistung |
|---|---|---|---|---|---|---|---|---|
| | davor | danach | | | | | | |
| neues Produkt | 178 | 145,9 | 32,3 | 47,2 | 0,87 | 1,34 | *1 | 1,17 |
| Standard | 178 | 132,6 | 45,2 | 49,0 | 0,57 | 1,28 | *2 | 0,73 |

*1 = Mittelwert aus vier Versuchen

*2 = Mittelwert aus drei Versuchen

Das erfindungsgemäße Mittel wurde auch als Strahlmittel getestet und diese Versuche ergaben, daß es qualitativ üblichen Strahlmitteln zwar nicht überlegen ist, aber durchaus als Strahlmittel eingesetzt werden kann.

Herkömmlich hergestelltes Spinell ist zwar verhältnismäßig teuer, aber das in der deutschen Patentanmeldung P 43 33 021.5-41 beschriebene Verfahren zur Herstellung von Schmelzspinell läßt vermuten, daß nach diesem Verfahren Spinell preisgünstig hergestellt werden kann, weil es auf preisgünstigen Ausgangsstoffen beruht, nämlich auf Reststoffen oder Reststoffmischungen.

**Patentansprüche**

1.  Schleif-, Schneid- und Strahlmittel auf der Basis von Spinell,
    **dadurch gekennzeichnet,**
    daß das Mittel als Hauptphase Spinell enthält und als Nebenkomponenten Kalziumaluminatphasen und/oder Korund.

2.  Mittel nach Anspruch 1,
    **dadurch gekennzeichnet,**
    daß der Gehalt der Spinellphase an $Al_2O_3$ zwischen ca. 55 und ca. 98 Gew.% beträgt.

3.  Mittel nach Patentanspruch 1 oder 2,
    **dadurch gekennzeichnet,**
    daß der Anteil der Kalziumaluminatphasen zwischen ca. 1 und ca. 40 Vol.% beträgt, vorzugsweise zwischen ca. 5 und ca. 15 Gew.%.

4. Mittel nach einem der Patentansprüche 1 - 3,
   **dadurch gekennzeichnet,**
   daß das Verhältnis von CaO zu $Al_2O_3$ in den Kalziumaluminatphasen zwischen ca. 1 und ca. 6 beträgt.

5. Mittel nach Anspruch 4,
   **dadurch gekennzeichnet,**
   daß die Hauptkalziumphase als CaO x 6 $Al_2O_3$ vorliegt.

6. Mittel nach einem der Patentansprüche 1 - 5,
   **dadurch gekennzeichnet,**
   daß der Anteil der Korundphase zwischen ca. 1. und ca. 50 Vol.% beträgt, vorzugsweise zwischen ca. 1 und ca. 10 Vol.%.

7. Mittel nach einem der Patentansprüche 1 - 6,
   **dadurch gekennzeichnet,**
   daß die Kalziumaluminatphasen bzw. der Korund auf Korngrenzen und/oder in den Spinellkristallen eingelagert vorliegen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 209 084 (NORDDEUTSCHE SCHLEIFMITTEL-INDUSTRIE CHRISTIANSEN & CO.) <br> * Spalte 4 * <br> * Spalte 6, Zeile 38-48; Anspruch 22 * <br> --- | 1,2 | B24C11/00 <br> C09K3/14 |
| X | EP-A-0 227 374 (MINNESOTA MINING AND MANUFACTURING COMPANY) <br> * Seite 2, Zeile 43-45 * <br> * Seite 3, Zeile 1-6 * <br> * Seite 5, Zeile 1-52 * <br> --- | 1,2 | |
| X | US-A-3 973 977 (WILSON) <br> * Zusammenfassung * <br> * Spalte 2, Zeile 28-51 * <br> * Spalte 3, Zeile 36-55 * <br> --- | 1 | |
| A | US-A-4 647 547 (SINGH ET AL.) <br> * das ganze Dokument * <br> --- | 1,2,6,7 | |
| A | US-A-5 187 903 (HOLM) <br> * Spalte 5, Zeile 49 - Spalte 6, Zeile 42; Ansprüche 1,8 * <br> --- | 1 | **RECHERCHIERTE SACHGEBIETE (Int.Cl.6)** <br><br> B24C <br> C09K |
| A | US-A-4 906 255 (NIKITINA ET AL.) <br> * das ganze Dokument * <br> --- | 3 | |
| A | EP-A-0 024 099 (MINNESOTA MINING AND MANUFACTURING COMPANY) <br> --- | | |
| A | GB-A-2 186 588 (VEREINIGTE SCHMIRGEL-UND MASCHINEN-FABRIKEN AKTIENGESELLSCHAFT) <br> ----- | | |

Der vorliegende Recherchenbericht wurde für alle Patentansprüche erstellt

| Recherchenort | Abschlußdatum der Recherche | Prüfer |
|---|---|---|
| DEN HAAG | 9. Januar 1995 | Petersson, B |

EPO FORM 1503 03.82 (P04C03)